# EUROPÄISCHE PATENTSCHRIFT

(11) **EP 2 057 033 B1**
(45) Veröffentlichungstag und Bekanntmachung des Hinweises auf die Patenterteilung: **12.06.2013**
(21) Anmeldenummer: 08707200.5
(22) Anmeldetag: 23.01.2008
(51) Int. Cl.: B60N 2/20

(54) **VERRIEGELUNGSVORRICHTUNG FÜR EINEN FAHRZEUGSITZ**
LOCKING DEVICE FOR A VEHICLE SEAT
DISPOSITIF DE VERROUILLAGE POUR UN SIÈGE DE VÉHICULE

(30) Priorität: 06.02.2007 DE 102007006603
(43) Veröffentlichungstag der Anmeldung: 13.05.2009
(73) Patentinhaber: KEIPER GmbH & Co. KG, 67657 Kaiserslautern (DE)
(72) Erfinder: VEDDER, Andreas, 42781 Haan (DE)
(74) Vertreter: Liedtke, Markus
(86) Internationale Anmeldenummer: PCT/EP2008/000477
(87) Internationale Veröffentlichungsnummer: WO 2008/095602

(56) Entgegenhaltungen:
- WO-A-01/76907
- DE-A1- 10 121 352
- DE-A1-102004 051 873

## Beschreibung

Die Erfindung betrifft eine Verriegelungsvorrichtung mit den Merkmalen des Oberbegriffs des Anspruches 1.

Bei einer bekannten Verriegelungsvorrichtung dieser Art werden zum Übergang in den entriegelten Zustand die Sicherungselemente vom ersten Verriegelungselement weggeschwenkt und offen gehalten. Dabei ist dem durch Überlagerungen von Federvorspannungen vorhandenen schließenden Moment auf die Sicherungselemente ein entsprechend großes Gegenmoment aufzubringen.

Aus der DE 10 2004 05 1873 A1 und der WO 01/76907 sind Verriegelungsvorrichtungen für einen neigungsverstell- und in eine Easy-Entry-Position vorklappbare Rückenlehne bekannt.

Der Erfindung liegt die Aufgabe zu Grunde, eine Verriegelungsvorrichtung der eingangs genannten Art weiter zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, dass beim Öffnen des von der Feder beaufschlagten Sicherungselementes sich die Wirkungslinie der Kraft in Abhängigkeit der Winkelstellung des Sicherungselementes dem Zentrum nähert, verringert sich das von der Feder auf das Sicherungselement ausgeübte Moment, so dass dieses mit einem verringerten Betätigungsmoment zu überwinden ist. Vorzugsweise geht die Wirkungslinie der Kraft in wenigstens einer Winkelstellung des von der Feder beaufschlagten Sicherungselementes durch das Zentrum, so dass dann die Feder in dieser Winkelstellung kein Moment auf das Sicherungselement ausübt. Sofern das Sicherungselement im entriegelten Zustand der Verriegelungsvorrichtung offen gehalten werden muss, kann das Zusammenwirken zwischen Feder und Sicherungselement, beispielsweise mittels Verwendung einer Steuerkontur, so eingestellt werden, dass das offen gehaltene Sicherungselement genau diese Winkelstellung einnimmt, also das gesamte, durch eine Überlagerung der verschiedenen Vorspannungen definierte, zum Offenhalten aufzubringende Gegenmoment minimal wird.

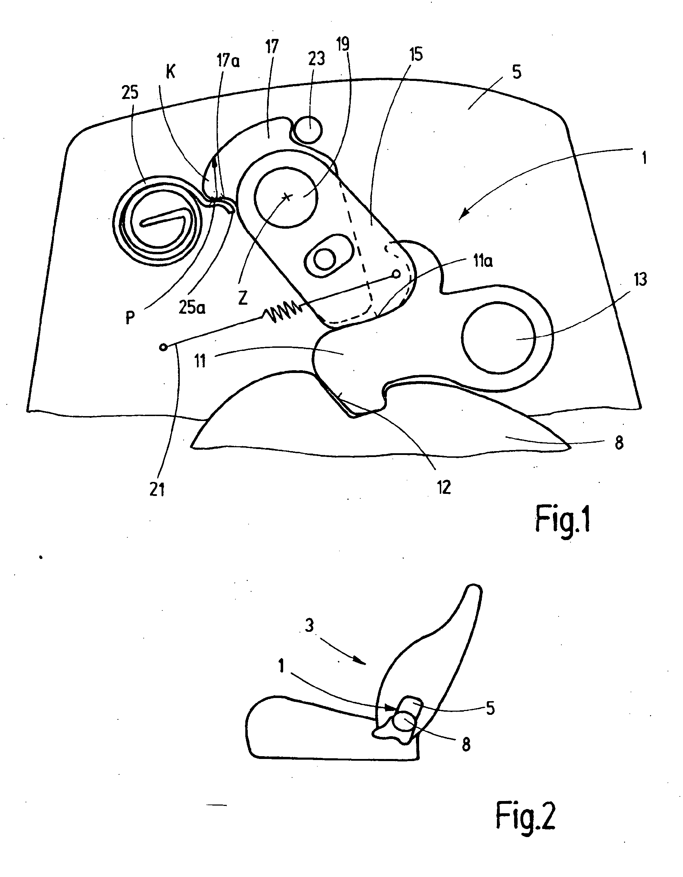

Im Folgenden ist die Erfindung anhand eines in der Zeichnung dargestellten Ausführungsbeispiels näher erläutert. Es zeigen
- Fig. 1: eine Ansicht des Ausführungsbeispiels im verriegelten Zustand,
- Fig. 2: eine schematische Seitenansicht eines Fahrzeugsitzes,

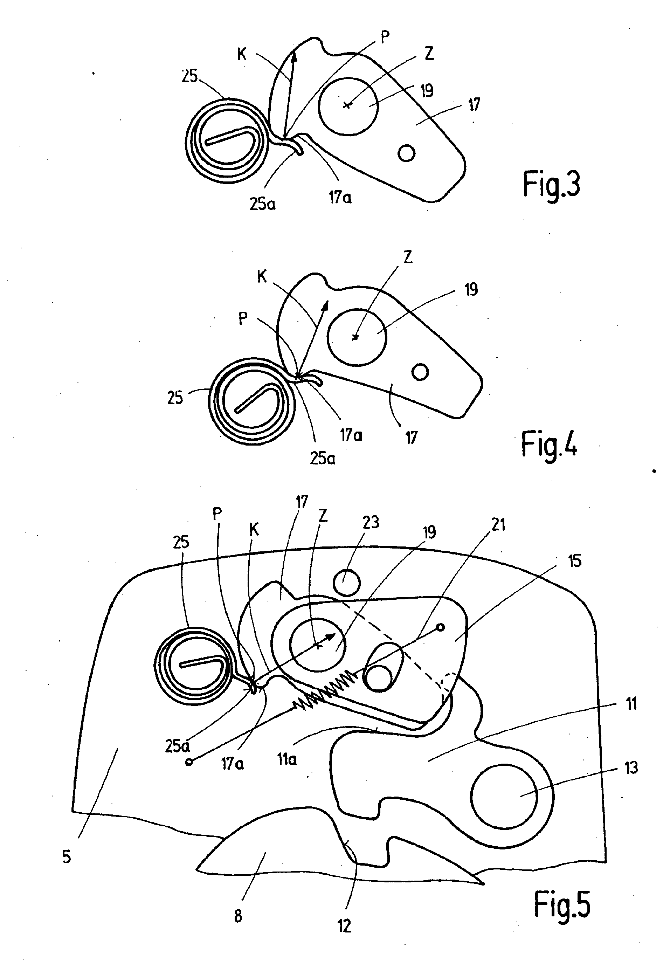

- Fig. 3: eine Teilansicht des Ausführungsbeispiels in einer ersten Zwischenstellung,
- Fig. 4: eine Teilansicht des Ausführungsbeispiels in einer zweiten Zwischenstellung, und
- Fig. 5: eine Ansicht des Ausführungsbeispiels im entriegelten Zustand.

Eine Verriegelungsvorrichtung 1 eines Fahrzeugsitzes 3 eines Kraftfahrzeuges ist dafür vorgesehen, ein erstes Bauteil 5 mit einem zweiten Bauteil 8 lösbar zu verriegeln, und zwar crashsicher. Die beiden Bauteile 5 und 8 können beispielsweise Beschlagteile eines Rastbeschlags, wie er beispielsweise in der EP 1 187 738 B1 offenbart ist, oder eines Getriebebeschlags mit Freischwenkfunktion sein, wie er beispielsweise in der EP 1 334 867 B1 offenbart ist. Für das vorliegende Ausführungsbeispiel ist die letztgenannte Variante gewählt. Das erste Bauteil 5 kann aber auch ein Schloss, wie beispielsweise in der EP 1 373 011 B1 offenbart ist, und das zweite Bauteil 8 das zugehörige Gegenelement sein, wobei ein solches Schloss beispielsweise zum Verriegeln der Lehne oder der Füße des Fahrzeugsitzes mit der Fahrzeugstruktur dient. Die diesbezüglichen Offenbarungsgehalte werden ausdrücklich einbezogen.

Die Verriegelungsvorrichtung 1 umfasst ein erstes Verriegelungselement 11, welches beweglich, vorzugsweise schwenkbar, am ersten Bauteil 5 gelagert ist, und ein zweites Verriegelungselement 12, welches am zweiten Bauteil 8 vorgesehen ist, insbesondere angeformt oder angebracht ist oder das zweite Bauteil 8 bildet. Die beiden Bauteile 5 und 8 sind miteinander verriegelt, d.h. die Verriegelungsvorrichtung 1 befindet sich in einem verriegelten Zustand, wenn die beiden Verriegelungselemente 11 und 12 zusammenwirken. Für das vorliegende Ausführungsbeispiel ist das erste Verriegelungselement 11 eine Klinke, die schwenkbar auf einem ersten Lagerbolzen 13 gelagert ist, welcher fest mit dem ersten Bauteil 5 verbunden ist, und die eine Verzahnung trägt, während das zweite Verriegelungselement 12 eine am zweiten Bauteil 8 angeformte Gegenverzahnung ist. Auf der vom zweiten Verriegelungselement 12 abgewandten Seite weist das erste Verriegelungselement 11 eine Anlagefläche 11 a auf.

Die Verriegelungsvorrichtung 1 umfasst ferner ein erstes Sicherungselement 15 und ein zweites Sicherungselement 17. Beide Sicherungselemente 15 und 17 sind schwenkbar auf einem zum ersten Lagerbolzen 13 parallelen zweiten Lagerbolzen 19 des ersten Bauteils 5 gelagert, insbesondere auf dem gleichen zweiten Lagerbolzen 19. Das Zentrum des zweiten Lagerbolzens 19 ist mit Z bezeichnet. Der zweite Lagerbolzen 19 kann als Welle ausgebildet sein, auf welcher eines der beiden Sicherungselemente 15 oder 17 drehfest sitzt. Beide Sicherungselemente 15 und 17 sind zum ersten Verriegelungselement 11 hin vorgespannt, wobei letzteres sich mit seiner Anlagefläche 11a im Schwenkbereich der Sicherungselemente 15 und 17 befindet, wenn es mit dem zweiten Verriegelungselement 12 zusammenwirkt, insbesondere im Eingriff befindet oder wenigstens anschnäbelt.

Das erste Sicherungselement 15 dient als Spannelement und wird durch eine - vorliegend als Zugfeder ausgebildete - Spannfeder 21 vorgespannt. Das derart federbelastete erste Sicherungselement 15 sichert den verriegelten Zustand der Verriegelungsvorrichtung 1 im Normalfall, indem das erste Sicherungselement 15 das erste Verriegelungselement 11 an der Anlagefläche 11a beaufschlagt und gegen das zweite Verriegelungselement 12 vorspannt. Dabei liegt das - vorliegend als Exzenter ausgebildete - erste Sicherungselement 15 mit einem Winkel außerhalb des Selbsthemmungsbereichs spielfrei an der Anlagefläche 11a an. Wirken zwischen den Bauteilen 5 und 8 sehr hohe Kräfte, beispielsweise im Falle eines Crashs, übt das erste Verriegelungselement 11 ein öffnendes Moment aus das erste Sicherungselement 15 aus, so dass dieses entgegen seiner Vorspannung zurückgeschwenkt wird. Das erste Verriegelungselement 11 kann sich dadurch in seine Öffnungsrichtung bewegen.

Das zweite Sicherungselement 17 dient als Fangelement, welches im Normalfall in einem geringen, d.h. gegenüber den Zahnhöhen der Verriegelungselemente 11 und 12 geringen, Abstand angeordnet ist, vorliegend an einem Anschlag 23 anliegt. Das zweite Sicherungselement 17 stützt im Crashfall das in seine Öffnungsrichtung schwenkende erste Verriegelungselement 11 nach einem kurzen Schwenkweg ab, indem es mit einem Winkel innerhalb des Selbsthemmungsbereichs, insbesondere ohne ein öffnendes Moment auszuüben, an der Anlagefläche 11a oder einer anderen Fläche des ersten Verriegelungselements 11 anliegt. Das zweite Sicherungselement 17 kann in dem abstützenden Bereich beispielsweise konzentrisch um den zweiten Lagerbolzen 19 gekrümmt sein oder tangential dazu verlaufen. Vorliegend ist das zweite Sicherungselement 17 durch eine Feder 25 vorgespannt. Die Feder 25 ist vorliegend als Flachspiralfeder ausgebildet.

Um die Verriegelungsvorrichtung 1 zu entriegeln, also in den entriegelten Zustand zu bringen, wird zunächst eines der beiden Sicherungselemente 15 oder 17 mittels des als Welle ausgebildeten Lagerbolzens 19 oder eines am Sicherungselement 15 oder 17 angebrachten Seilzuges vom ersten Verriegelungselement 11 weggeschwenkt, d.h. geöffnet, und offen gehalten. Vorzugsweise sind die beiden Sicherungselemente 15 und 17 miteinander wegverzögert auf Mitnahme gekoppelt, beispielsweise durch eine Schlitz-Zapfen-Führung, so dass nach einem definierten Leerweg das zunächst unbewegte, andere der beiden Sicherungselemente 15 und 17 mitgenommen wird. Das erste Verriegelungselement 11 wird dadurch freigegeben, wobei vorzugsweise das sich öffnende zweite Sicherungselement 17 das erste Verriegelungselement 11 aufzieht, beispielsweise mittels eines Fingers oder dergleichen. Damit entfernt sich das erste Verriegelungselement 11 vom zweiten Verriegelungselement 12. Sobald die beiden Verriegelungselemente 11 und 12 sich soweit voneinander entfernt haben, dass sie nicht mehr zusammenwirken, ist die Verriegelungsvorrichtung 1 entriegelt. Die beiden Bauteile 5 und 8 können nun relativ zueinander bewegt werden. Wird das zuerst weggeschwenkte Sicherungselement 15 oder 17 losgelassen, sorgen die Vorspannungen dafür, dass das erste Verriegelungselement 11 wieder vom ersten Sicherungselement 15 beaufschlagt und in Eingriff mit dem zweiten Verriegelungselement 12 gebracht wird.

Das Moment, das zum Offenhalten der vorgespannten Sicherungselemente 15 und 17 notwendig ist, bestimmt sich durch die Kennlinien der Vorspannungen der Sicherungselemente 15 und 17, vorliegend also der Spannfeder 21 und der Feder 25. Die Feder 25 wirkt mit einer Steuerkontur 17a des zweiten Sicherungselementes 17 zusammen, wobei vorliegend ein Federarm 25a am radial äußeren Ende der Feder 25 in einem ortsveränderlichen Punkt P an der Steuerkontur 17a anliegt und an dieser entlang gleiten kann. Im verriegelten Zustand wirkt die Spannfeder 21 mit relativ kleiner Kraft und einem relativ großem Wirk-Hebelarm zum Zentrum Z auf das erste Sicherungselement 15. Die Feder 25 hält mit kleiner Kraft und großem Wirkabstand zum Zentrum Z das zweite Sicherungselement 17.

Beim Öffnen wird das erste Sicherungselement 15 weggeschwenkt und spannt hierbei die Spannfeder 21. Durch das Spannen vergrößert sich die Kraft der Spannfeder 21 und gleichzeitig reduziert sich der Wirk-Hebelarm. Im Falle des zweiten Sicherungselementes 17 ist zunächst ein großes Entriegelungsmomentes gegen die Feder 25 zu überwinden. Im weiteren Öffnungsvorgang verringert sich dieses erforderliche Entriegelungsmoment aufgrund der erfindungsgemäß gewählten Form der Steuerkontur 17a, vorliegend einem zum zweiten Lagerbolzen 23 konzentrisch gekrümmten Abschnitt. Die Wirkungslinie der zweite Sicherungselement 17 im momentanen Punkt P beaufschlagenden Kraft K der Feder 25, genauer gesagt die Gerade entlang der Wirkungslinie der Kraft K, nähert sich in Abhängigkeit der Winkelstellung des zweiten Sicherungselementes 17 dem Zentrum Z des zweiten Lagerbolzens 23, also der Drehachse des zweiten Sicherungselementes 17.

Damit nähert sich die Kennlinie des Moments, welches um den zweiten Lagerbolzen 19 von der Kraft der Feder 25 auf das zweite Sicherungselement 17 ausgeübt wird, kurz als Momenten-Kennlinie bezeichnet, in Abhängigkeit der Winkelstellung des zweiten Sicherungselementes 17 einer Nullstelle. Diese Nullstelle wird bei einer bestimmten Winkelstellung des zweiten Sicherungselementes 17 erreicht, vorliegend am Ende des Öffnungsvorgangs. Die Feder 25 übt dann kein Moment auf das zweite Sicherungselement 17 aus. Vielmehr geht die Kraft K direkt durch das Zentrum Z. Es liegt dann nur eine reine Lagerkraft am zweiten Sicherungselement 17 an. Das gesamte Gegenmoment, das zum Offenhalten beider Sicherungselemente 15 und 17 notwendig ist, erreicht dadurch ein Minimum.

Durch entsprechende Wahl der Steuerkontur 17a kann die Momenten-Kennlinie, d.h. die Kennlinie des Momentes, welches um den zweiten Lagerbolzen 19 von der Kraft der Feder 25 auf das zweite Sicherungselement 17 ausgeübt wird, derart beeinflusst werden, dass die Kraft zum Entriegeln der Verriegelungsvorrichtung 1 einem als vom Benutzer angenehm empfundenen Betätigungs-Kraftverlauf entspricht. Beispielsweise kann der Betätigungs-Kraftverlauf zunächst leicht erhöht sein, dann abnehmen und schließlich moderat ansteigen.

Beim Verriegeln (Schließen) zieht zunächst die Spannfeder 21 das erste Sicherungselement 15 in Schließrichtung. Das erste Sicherungselement 15 nimmt über die Schlitz-Zapfen-Führung das zweite Sicherungselement 17 mit. Wenn das zweite Sicherungselement 17 sich dem Anschlag 23 nähert, wird es aufgrund seiner Steuerkurve 17a und der Feder 25 in seine Sperrstellung bewegt, also in Anlage an den Anschlag 23 gebracht. Zugleich drückt das erste Sicherungselement 15 das erste Verriegelungselement 11 in seine Verriegelungsposition und stellt das System spielfrei.

### Bezugszeichenliste

| | |
|---|---|
| 1 | Verriegelungsvorrichtung |
| 3 | Fahrzeugsitz |
| 5 | erstes Bauteil |
| 8 | zweites Bauteil |
| 11 | erstes Verriegelungselement |
| 11a | Anlagefläche |
| 12 | zweites Verriegelungselement |
| 13 | erster Lagerbolzen |
| 15 | erstes Sicherungselement |
| 17 | zweites Sicherungselement |
| 17a | Steuerkontur |
| 19 | zweiter Lagerbolzen |
| 21 | Spannfeder |
| 23 | Anschlag |
| 25 | Feder |
| 25a | Federarm |
| K | Kraft |
| P | Punkt |
| Z | Zentrum |

## Patentansprüche

1. Verriegelungsvorrichtung, insbesondere für einen Fahrzeugsitz, zum lösbaren Verriegeln zweier relativ zueinander beweglicher Bauteile (5, 8), mit einem ersten Verriegelungselement (11), welches beweglich, insbesondere um einen ersten Lagerbolzen (13) schwenkbar, am ersten Bauteil (5) gelagert ist, einem zweiten Verriegelungselement (12), welches dem zweiten Bauteil (8) zugeordnet ist und welches in einem verriegelten Zustand der Verriegelungsvorrichtung (1) mit dem ersten Verriegelungselement (11) zusammenwirkt, wenigstens einem relativ zum ersten Verriegelungselement (11) beweglichen Sicherungselement (15, 17), welches den verriegelten Zustand der Verriegelungsvorrichtung (1) sichert, und wenigstens einer Feder (25), welche das Sicherungselement (15, 17), welches auf einem zweiten Lagerbolzen (19) um dessen Zentrum (Z) schwenkbar gelagert ist, an einem Punkt (P) mit einer Kraft (K) beaufschlagt und gegen das erste Verriegelungselement (11) oder gegen einen Anschlag (23) vorspannt, wobei beim Öffnen des von der Feder (25) beaufschlagten Sicherungselementes (15, 17) sich die Wirkungslinie der Kraft (K) in Abhängigkeit der Winkelstellung des Sicherungselementes (15, 17) dem Zentrum (Z) nähert, **dadurch gekennzeichnet, daß** das von der Feder (25) beaufschlagte Sicherungselement (15, 17) eine Steuerkontur (17a) aufweist, an welcher die Feder (25) im Punkt (P) mittels eines Federarms (25a) anliegt und die Steuerkontur (17a) wenigstens einen konzentrisch zum Zentrum (Z) gekrümmten Abschnitt aufweist, wobei die Feder (25) bei Anlage des Federarms (25a) im Punkt (P) an den konzentrisch zum Zentrum (Z) gekrümmten Abschnitt der Steuerkontur (17a) das Sicherungselement (15, 17) mit der durch das Zentrum (Z) gehenden Kraft (K) beaufschlagt.

2. Verriegelungsvorrichtung nach Anspruch 1, **dadurch gekennzeichnet, dass** in wenigstens einer Winkelstellung des von der Feder (25) beaufschlagten Sicherungselementes (15, 17) die Wirkungslinie der Kraft (K) durch das Zentrum (Z) geht.

3. Verriegelungsvorrichtung nach einem der vorhergehenden Ansprüche, **dadurch gekennzeichnet, dass** wenigstens zwei Sicherungselemente (15, 17) vorgesehen sind, von denen ein erstes Sicherungselement (15) den verriegelten Zustand der Verriegelungsvorrichtung (1) im Normalfall durch Beaufschlagen des ersten Verriegelungselementes (11) sichert.

4. Verriegelungsvorrichtung nach Anspruch 3, **dadurch gekennzeichnet, dass** das erste Sicherungselement (15) als Spannelement dient, welches im Normalfall das erste Verriegelungselement (11) beaufschlagt und gegen das zweite Verriegelungselement (12) vorspannt, insbesondere spielfrei.

5. Verriegelungsvorrichtung nach Anspruch 4, **dadurch gekennzeichnet, dass** eine Spannfeder (21) das erste Sicherungselement (15) vorspannt.

6. Verriegelungsvorrichtung nach einem der Ansprüche 3 bis 5, **dadurch gekennzeichnet, dass** von den vorgesehenen Sicherungselementen (15, 17) ein zweites Sicherungselement (17) relativ zum ersten Verriegelungselement (11) beweglich ist und wenigstens im Crashfall das erste Verriegelungselement (11) abstützt.

7. Verriegelungsvorrichtung nach Anspruch 6, **dadurch gekennzeichnet, dass** das zweite Sicherungselement (17) als Fangelement dient, welches im Normalfall in einem geringen Abstand zum ersten Verriegelungselement (11) angeordnet ist und im Crashfall das in seine Öffnungsrichtung schwenkende erste Verriegelungselement (11) abstützt.

8. Verriegelungsvorrichtung nach einem der vorhergehenden Ansprüche, **dadurch gekennzeichnet, dass** die Feder (25) als Flachspiralfeder ausgebildet ist.

9. Verriegelungsvorrichtung nach Anspruch 1, **dadurch gekennzeichnet, dass** bei einer Schwenkbewegung des von der Feder (25) beaufschlagten Sicherungselementes (15, 17) die Feder (25) mit ihrem Federarm (25a) an der Steuerkontur (17a) entlang gleitet.

10. Verriegelungsvorrichtung nach einem der vorhergehenden Ansprüche, **dadurch gekennzeichnet, dass** die Winkelstellung des von der Feder (25) beaufschlagten Sicherungselementes (15, 17) mit der durch das Zentrum (Z) gehenden Kraft (K) beim Entriegeln der Verriegelungsvorrichtung (1) erreicht wird.

11. Verriegelungsvorrichtung nach einem der vorhergehenden Ansprüche, **dadurch gekennzeichnet, dass** zum Entriegeln der Verriegelungsvorrichtung (1) zunächst die Sicherungselemente (15, 17) vom ersten Verriegelungselement (11) weggeschwenkt und dann die beiden Verriegelungselemente (11, 12) sich soweit voneinander entfernen, dass sie nicht mehr zusammenwirken.

12. Verriegelungsvorrichtung nach einem der vorhergehenden Ansprüche, **dadurch gekennzeichnet, dass** im entriegelten Zustand der Verriegelungsvorrichtung (1) die Sicherungselemente (15, 17) offen gehalten werden.

13. Fahrzeugsitz, insbesondere Kraftfahrzeugsitz, mit einer Verriegelungsvorrichtung (1) nach einem der vorhergehenden Ansprüche.

## Claims

1. Locking device, especially for a vehicle seat, for the releasable locking of two component parts (5, 8) movable relative to one another, with a first locking element (11), which is movable in bearings, and, especially, rotatable around a first bearing bolt (13), at the first component part (5), a second locking element (12), which is assigned to the second component part (8) and which cooperates with the first locking element (11) in a locked status of the locking device (1), at least one securing element (15, 17), which is movable relative to the first locking element (11) and which secures the locked status of the locking device (1), and at least one spring (25), which acts upon the securing element (15, 17), that swivels on a second bearing bolt (19) around that bearing bolt's (19)center (Z), at a point (P), applying a force (K) and pretensioning the securing element against the first locking element (11) or against a stop (23), while the line of action of the force (K), when the securing element (15, 17) acted upon by the spring (25) is opened, moves closer to the center (Z) depending on the angular position of the securing element (15, 17), **characterized in that** the securing element (15, 17) acted upon by the spring (25) presents a control contour (17a), at which the spring (25) is applied using a spring arm (25a) at point (P), and the control contour (17a) presents at least one section bent concentrically to the center (Z), while the spring (25), when the spring arm (25a) is applied at point (P) at the section of the control contour (17a) bent concentrically to the center (Z), acts upon the securing element (15, 17), applying the force (K) passing through the center (Z).

2. Locking device as claimed in claim 1, **characterized in that** the line of action of the force (K) passes through the center (Z) in at least one angular position of the securing element (15, 17) acted upon by the spring (25).

3. Locking device as claimed in any preceding claim, **characterized in that** at least two securing elements (15, 17) are provided, among which a first securing element (15) secures the locked status of the locking device (1) normally by acting upon the first locking element (11).

4. Locking device as claimed in claim 3, **characterized in that** the first securing element (15) is used as a tensioning element which normally acts upon and pretensions the first locking element (11) against the second locking element (12), especially without play.

5. Locking device as claimed in claim 4, **characterized in that** a tension spring (21) pretensions the first securing element (15).

6. Locking device as claimed in any claim 3 through 5, **characterized in that**, among the securing elements (15, 17) provided, a second securing element (17) is movable relative to the first locking element (11) and supports the first locking element (11) at least in the event of a crash.

7. Locking device as claimed in claim 6, **characterized in that** the second securing element (17) is used as a catching element which is normally located at a small distance to the first locking element (11) and, in the event of a crash, supports the first locking element (11) which swivels in its opening direction.

8. Locking device as claimed in any preceding claim, **characterized in that** the spring (25) is designed as a flat spiral spring.

9. Locking device as claimed in claim 1, **characterized in that**, during a swivel motion of the securing element (15, 17) acted upon by the spring (25), the spring (25) slides with its spring arm (25a) along the control contour (17a).

10. Locking device as claimed in any preceding claim, **characterized in that** the angular position of the securing element (15, 17) acted upon by the spring (25) is reached with the force (K) passing through the center (Z) when the locking device (1) is being unlocked.

11. Locking device as claimed in any preceding claim, **characterized in that**, for unlocking the locking device (1), the securing elements (15, 17) are first swiveled away from the first locking element (11) and then the two locking elements (11, 12) move away from one another for such a distance that they do not cooperate any longer.

12. Locking device as claimed in any preceding claim, **characterized in that**, in the unlocked status of the locking device (1), the securing elements (15, 17) are kept open.

13. A vehicle seat, especially a motor vehicle seat, having a locking device (1) as claimed in any preceding claim.

## Revendications

1. Dispositif de verrouillage, en particulier pour un siège de véhicule, destiné à verrouiller de manière amovible deux composants (5, 8) mobiles l'un par rapport à l'autre, avec un premier élément de verrouillage (11), lequel est monté de manière mobile sur le premier composant (5), en particulier en pivotant autour d'un premier tourillon (13), un deuxième élément de verrouillage (12) associé au deuxième composant (8) et coopérant avec le premier élément de verrouillage (11) dans un état de verrouillage du dispositif de verrouillage (1), au moins un élément de fixation (15, 17) mobile par rapport au premier élément de verrouillage (11) et qui bloque le dispositif de verrouillage (1) dans son état de verrouillage, et au moins un ressort (25) contraignant contre un point (P) par une force (K) l'élément de fixation (15, 17) qui est monté sur un deuxième tourillon (19) de manière pivotante autour du centre (Z) de celui-ci, et le serre contre le premier élément de verrouillage (11) ou contre une butée (23), la ligne d'action de la force (K) se rapprochant du centre (Z) en fonction de la position angulaire de l'élément de fixation (15, 17) lors de l'ouverture de l'élément de fixation (15, 17) contraint par le ressort (25), **caractérisé en ce que** l'élément de fixation (15, 17) contraint par le ressort (25) présente un contour de commande (17a), contre lequel le ressort (25) est appliqué au point (P) au moyen d'un bras de ressort (25a), et **en ce que** le contour de commande (17a) comprend au moins une partie courbée concentriquement au centre (Z), le ressort (25) contraignant l'élément de fixation (15, 17) avec la force (K) passant par le centre (Z) lors de l'application du bras de ressort (25a) au point (P) sur la partie courbée concentriquement au centre (Z) du contour de commande (17a).

2. Dispositif de verrouillage selon la revendication 1, **caractérisé en ce que** dans au moins une position angulaire de l'élément de fixation (15, 17) contraint par le ressort (25), la ligne d'action de la force (K) passe par le centre (Z).

3. Dispositif de verrouillage selon l'une des revendications précédentes, **caractérisé en ce qu'**au moins deux éléments de fixation (15, 17) sont prévus, dont un premier élément de fixation (15) bloque en cas normal le dispositif de verrouillage (1) dans son état de verrouillage par contrainte du premier élément de verrouillage (11).

4. Dispositif de verrouillage selon la revendication 3, **caractérisé en ce que** le premier élément de fixation (15) sert d'élément de serrage qui contraint le premier élément de verrouillage (11) en cas normal et le serre contre le deuxième élément de verrouillage (12), en particulier sans jeu.

5. Dispositif de verrouillage selon la revendication 4, **caractérisé en ce qu'**un ressort de serrage (21) contraint le premier élément de fixation (15).

6. Dispositif de verrouillage selon l'une des revendications 3 à 5, **caractérisé en ce que** parmi les éléments de fixation (15, 17) prévus, un deuxième élément de fixation (17) est mobile par rapport à un premier élément de verrouillage (11) et maintient le premier élément de verrouillage (11), au moins en cas de collision.

7. Dispositif de verrouillage selon la revendication 6, **caractérisé en ce que** le deuxième élément de fixation (17) sert d'élément de saisie, disposé à intervalle réduit du premier élément de verrouillage (11) en cas normal, et maintenant le premier élément de verrouillage (11) qui pivote dans sa direction d'ouverture en cas de collision.

8. Dispositif de verrouillage selon l'une des revendications précédentes, **caractérisé en ce que** le ressort (25) est réalisé sous forme de ressort spiral plat.

9. Dispositif de verrouillage selon la revendication 1, **caractérisé en ce qu'**en cas de pivotement de l'élément de fixation (15, 17) contraint par le ressort (25), ledit ressort (25) glisse par son bras de ressort (25a) le long du contour de commande (17a).

10. Dispositif de verrouillage selon l'une des revendications précédentes, **caractérisé en ce que** la position angulaire de l'élément de fixation (15, 17) contraint par le ressort (25) est atteinte par la force (K) passant par le centre (Z) lors du déblocage du dispositif de verrouillage (1).

11. Dispositif de verrouillage selon l'une des revendications précédentes, **caractérisé en ce que**, pour le déblocage du dispositif de verrouillage (1), les éléments de fixation (15, 17) sont d'abord dégagés par pivotement du premier élément de verrouillage (11), puis les deux éléments de verrouillage (11, 12) sont éloignés l'un de l'autre jusqu'à ne plus coopérer.

12. Dispositif de verrouillage selon l'une des revendications précédentes, **caractérisé en ce qu'**en état de déblocage du dispositif de verrouillage (1), les éléments de fixation (15, 17) sont maintenus ouverts.

13. Siège de véhicule, en particulier siège de véhicule poids lourd, avec un dispositif de verrouillage (1) selon l'une des revendications précédentes.
